# EUROPÄISCHE PATENTSCHRIFT

(11) **EP 4 214 435 B1**
(45) Veröffentlichungstag und Bekanntmachung des Hinweises auf die Patenterteilung: **19.08.2026**
(21) Anmeldenummer: 21790072.9
(22) Anmeldetag: 16.09.2021
(51) Int. Cl.: F16L 25/00, F16L 33/207, F16L 33/22, F16L 33/26, F16L 13/14, F16L 19/028, F16L 19/065, F16L 19/075, F16L 19/10, F16L 37/088

(54) **ANSCHLUSSVORRICHTUNG ZUM ANSCHLIESSEN EINES ROHRES MIT AUSSENUMFANGSSEITIGER ERHEBUNG, VERWENDUNGEN UND MONTAGEVERFAHREN**
CONNECTION DEVICE FOR CONNECTING A PIPE HAVING AN OUTER PERIPHERAL PROJECTION, USES AND INSTALLATION METHOD
DISPOSITIF DE RACCORDEMENT DESTINÉ À RACCORDER UN TUYAU À SURÉLÉVATION CÔTÉ PÉRIPHÉRIQUE EXTÉRIEUR, UTILISATIONS ET PROCÉDÉ DE MONTAGE

(30) Priorität: 16.09.2020 DE 102020124183; 16.09.2020 DE 102020124185; 24.09.2020 DE 102020124940
(43) Veröffentlichungstag der Anmeldung: 26.07.2023
(73) Patentinhaber: AZ Vermögensverwaltung GmbH & Co. KG, 09526 Olbernhau (DE)
(72) Erfinder: ZIMMERMANN, Dirk, 09526 Olbernhau (DE)
(74) Vertreter: Launhardt, Thomas
(86) Internationale Anmeldenummer: PCT/DE2021/100763
(87) Internationale Veröffentlichungsnummer: WO 2022/057982

(56) Entgegenhaltungen:
- WO-A1-2005/100840
- US-A1- 2010 007 140
- US-A1- 2010 090 459

## Beschreibung

Die vorliegende Offenbarung betrifft eine Anschlussvorrichtung zum Anschließen eines Rohres mit außenumfangsseitiger Erhebung sowie ein Montageverfahren.

Eine Anschlussvorrichtung zum Anschließen einer Leitung mit einem profilierten Außendurchmesser ist aus der EP 2 019 246 A2 bekannt. Weitere Anschlussvorrichtungen sind aus der US 2010/090459 A1 und der US 2010/007140 A1 bekannt.

Eine Aufgabe kann darin gesehen werden, wenigstens eine Möglichkeit vorzuschlagen, um ein Rohr mit außenumfangsseitiger Erhebung dichtend anschließen zu können.

Die Aufgabe wird mit einer Anschlussvorrichtung gelöst, welche die Merkmale des Anspruches 1 aufweist. Zur Lösung der Aufgabe werden ferner eine Verbindungsanordnung mit den Merkmalen des Anspruches 9, eine Verwendung mit den Merkmalen des Anspruches 10 und eine Verwendung mit den Merkmalen des Anspruches 11 vorgeschlagen. Darüber hinaus wird zur Lösung der Aufgabe ein Verfahren mit den Merkmalen des Anspruches 12 vorgeschlagen.

Vorteilhafte Ausführungsformen und/oder Ausgestaltungen und/oder Aspekte ergeben sich aus den Unteransprüchen, der nachfolgenden Beschreibung und den Figuren.

Nach einem Aspekt wird eine Anschlussvorrichtung zum Anschließen eines Rohres mit außenumfangsseitiger Erhebung, wie beispielsweise einem Wellrohr, vorgeschlagen. Die Anschlussvorrichtung umfasst ein Anschlussteil mit einer Aufnahme, um darin einen die Erhebung aufweisenden Längenabschnitt des Rohres einzustecken. Unter der Bezeichnung "Rohr" ist in der nachfolgenden Offenbarung ein länglicher Hohlkörper vorzugsweise beliebiger Art, insbesondere mit beliebigem Querschnitt, beispielsweise rundem oder kreisrundem Querschnitt, zu verstehen.

Die Aufnahme weist eine in eine Einsteckrichtung verlaufende Mittelachse auf. Die Aufnahme ist durch eine um die Mittelachse verlaufende Umfangswandung umfangsseitig begrenzt. Die Aufnahme weist eine Einstecköffnung mit einer quer zur Mittelachse angeordneten Öffnungsfläche auf. Die Aufnahme weist ferner eine quer zur Mittelachse angeordnete Bodenfläche auf.

Die Bodenfläche dient dazu, daran die Erhebung des Rohres in Anlage zu bringen. Durch diese Anlage ist eine fluiddichte Verbindung zwischen dem Rohr und dem Anschlussteil begünstigt, da eine Flanke der Erhebung einerseits und die Bodenfläche andererseits als gegeneinander dichtende Flächen wirken können. Beispielsweise sind die Bodenfläche und die Flanke der Erhebung zueinander korrespondiert und/oder jeweils eben ausgebildet.

Insbesondere ist das Anschlussteil rotationssymmetrisch ausgebildet, beispielsweise rotationssymmetrisch bezüglich der Mittelachse der Aufnahme ausgebildet. Insbesondere ist das Anschlussteil rohrförmig oder hülsenförmig ausgebildet. Insbesondere ist die Aufnahme in einem rohrförmigen oder hülsenförmigen Abschnitt des Anschlussteiles angeordnet oder ausgebildet. Insbesondere ist zumindest im Bereich der Aufnahme der Außenumfang des Anschlussteiles in axialer Richtung gleichförmig verlaufend und/oder mit gleichem Radius verlaufend. Insbesondere ist der Außenumfang des Anschlussteiles konzentrisch zur Aufnahme ausgebildet. Insbesondere sind die Mittelachse des Anschlussteiles und die Mittelachse der Aufnahme koaxial zueinander angeordnet.

Weiterhin umfasst die Anschlussvorrichtung ein Ringelement. Das Ringelement ist eingerichtet, den Längenabschnitt des Rohres zumindest teilweise zu umgeben und/oder zu umgreifen. Das Ringelement kann einteilig oder mehrteilig, beispielsweise zweiteilig aufgebaut sein. Beispielsweise bilden die Teile des Ringelements jeweils einen Umfangsabschnitt des Ringelementes. Beispielsweise ist das Ringelement durch zwei Halbschalen gebildet. Beispielsweise ist das Ringelement zylinderförmig ausgebildet, insbesondere als Hohlzylinder ausgebildet. Beispielsweise ist das Ringelement hülsenförmig. Beispielsweise ist das Ringelement im Querschnitt rund, insbesondere kreisrund, ausgebildet.

Das Ringelement ist eingerichtet, in einen Zwischenraum zwischen der Umfangswandung der Aufnahme und dem Rohr in die Aufnahme derart eingebracht zu werden, dass ein axiales Ende des Ringelementes als Sperre für die Erhebung wirkt. Dadurch ist bewirkt, das Rohr gegen ein Herausbewegen aus der Aufnahme zu sichern, indem ein axial wirkender Formschluss entgegen der Einsteckrichtung erreicht ist. Dadurch ist es ferner begünstigt, das Rohr mit seiner Erhebung in Anlage gegen die Bodenfläche zu halten. Dadurch wiederum ist es begünstigt, eine fluiddichte Verbindung zwischen dem Rohr und dem Anschlussteil dauerhaft aufrecht zu erhalten.

Die Anschlussvorrichtung umfasst ein Sicherungsteil, welches dem Anschlussteil zugeordnet ist. Das Sicherungsteil weist wenigstens einen Materialabschnitt auf, welcher ein verformbares Material aufweist oder daraus besteht. Der wenigstens eine Materialabschnitt ist eingerichtet, durch eine Verformung in eine Sperrposition gebracht zu werden, um eine Sperre gegen ein Herausbewegen des Ringelementes aus der Aufnahme auszubilden. Die Sperrposition ist eine radiale Position in Bezug auf die Mittelachse der Aufnahme, in welcher der wenigstens eine Materialabschnitt als Sperre gegen ein Herausbewegen des Ringelementes aus der Aufnahme wirkt bzw. wirken kann.

Dadurch ist eine weitere Maßnahme getroffen, um das Rohr gegen ein Herausbewegen aus der Aufnahme zu sichern. Diese Maßnahme zielt nunmehr auf das Ringelement ab, wobei durch den Materialabschnitt ein Herausbewegen des Ringelementes aus der Aufnahme verhindert werden soll und/oder ein axial wirkender Formschluss entgegen der Einsteckrichtung erreicht werden soll. Auch ist es dadurch begünstigt, das Ringelement in seiner eingesteckten Position zu halten, in welcher das Rohr mit seiner Erhebung in Anlage gegen die Bodenfläche der Aufnahme gehalten ist. Dadurch wiederum ist es begünstigt, eine fluiddichte Verbindung zwischen dem Rohr und dem Anschlussteil dauerhaft aufrecht zu erhalten.

Unter dem Begriff "Verformung" ist in der vorliegenden Offenbarung eine Formänderung eines Körpers, wie beispielsweise des vorstehend beschriebenen Materialabschnitts, infolge der Einwirkung einer äußeren Kraft zu verstehen. Die Verformung kann irreversibel sein. Eine solche Verformung ist dauerhaft, beispielsweise ab dem Erreichen einer Fließgrenze des verformbaren bzw. verformten Körpers, und wird daher auch als "plastische Verformung" bezeichnet. Eine Voraussetzung für eine plastische Verformung ist, dass das Material des zu verformenden Körpers umformbar ist. Unter dem Begriff "umformbar" oder "Umformbarkeit" ist in der vorliegenden Offenbarung die Eigenschaft des Materials oder generell eines Werkstoffes zu verstehen, durch äußere Beanspruchung bleibend umgeformt zu werden. Die Verformung kann durch ein Bördeln oder eine sonstige Kaltumformung bewirkt sein.

Es ist vorgesehen, dass der Materialabschnitt ein umformbares Material aufweist oder daraus besteht und eingerichtet ist, umgeformt zu werden, um die vorstehend beschriebene Sperre gegen ein Herausbewegen des Ringelementes aus der Aufnahme auszubilden, also durch eine Umformung in die Sperrposition gebracht zu werden. Der Materialabschnitt ist eingerichtet, radial nach innen gerichtet, also radial nach innen in Richtung zu der Mittelachse der Aufnahme, umgeformt zu werden, um die Sperre gegen ein Herausbewegen des Ringelementes aus der Aufnahme auszubilden. Die auf diese Weise erzeugte Sperre ist beispielsweise unlösbar und/oder dauerhaft.

Durch den umformbaren Materialabschnitt kann eine vorzugsweise gezielte Formänderung genutzt werden, um die Sperre für das Ringelement zu realisieren. Eine solche Formänderung kann in einfacher Weise durch ein Presswerkzeug oder dergleichen Werkzeug erreicht werden. Beispielsweise bedarf es dazu lediglich, dass eine Umformkraft in axialer Richtung bzw. in Einsteckrichtung aufzubringen ist.

Beispielsweise ist der Materialabschnitt um die Mittelachse der Aufnahme umlaufend ausgebildet. Beispielsweise ist der Materialabschnitt um die Mittelachse der Aufnahme vollständig umlaufend oder mit wenigstens einer Unterbrechung umlaufend oder mit zumindest einem Umfangsabschnitt umlaufend.

Es ist vorgesehen, dass das Sicherungsteil ist an dem Anschlussteil ausgebildet ist. Das Sicherungsteil kann an dem Anschlussteil angeformt sein.

Es ist vorgesehen, dass der Materialabschnitt des Sicherungsteils an einem axialen Längenabschnitt der Umfangswandung der Aufnahme ausgebildet ist. Der Materialabschnitt des Sicherungsteils ist durch den axialen Längenabschnitt der Umfangswandung gebildet. Dadurch ist eine technisch einfache Realisierung des Sicherungsteils begünstigt, da das Sicherungsteil als Bestandteil des Anschlussteils bereits im Zuge der Herstellung des Anschlussteiles gefertigt werden kann. Auch ist dadurch ein Erreichen einer hohen Funktionsintegrität begünstigt, da die Funktion des Sicherungsteils durch das Anschlussteil ausgeübt werden kann und somit ein separates Sicherungsteil entfallen kann.

Die Umfangswandung der Aufnahme ist eingerichtet, über den axialen Längenabschnitt, welcher im Bereich der Einstecköffnung der Aufnahme vorliegt, radial nach innen gerichtet umgeformt zu werden, um die Sperre gegen ein Herausbewegen des Ringelementes aus der Aufnahme auszubilden. Durch die Umformung der Umfangswandung radial nach innen ist eine radiale Verjüngung der Aufnahme im Bereich der Einstecköffnung erreicht. Aufgrund der Umformung der Umfangswandung radial nach innen ist die Öffnungsfläche der Einstecköffnung verringert.

Um eine Umformung der Umfangswandung in dem axialen Längenabschnitt zu begünstigen bzw. zu erleichtern, ist es erfindungsgemäß vorgesehen, dass die Umfangswandung der Aufnahme in einem Bereich des axialen Längenabschnitts eine Wanddicke aufweist, welche kleiner als die Wanddicke der Umfangswandung in einem benachbarten axialen Längenabschnitt ist. Der benachbarte axiale Längenabschnitt erstreckt sich in Richtung der Bodenfläche der Aufnahme.

Eine mögliche Ausführungsform besteht darin, dass das Ringelement einen radial nach außen stehenden und/oder nach außen ragenden Vorsprung aufweist. Der Vorsprung ist in axialer Richtung des Ringelementes elastisch bewegbar und/oder elastisch verformbar. Insofern kann der Vorsprung auch als "elastischer Vorsprung" bezeichnet werden.

Unter dem Begriff "elastisch" ist in der vorliegenden Offenbarung die Eigenschaft eines Materials oder Werkstoffs zu verstehen, unter Krafteinwirkung seine Form zu verändern und bei Wegfall der Krafteinwirkung bevorzugt in die Ursprungsform zurückzukehren. Darunter ist auch zu verstehen, dass der Vorsprung unter Krafteinwirkung sich in axialer Richtung des Ringelementes bewegt und/oder verformt und bei Wegfall der Krafteinwirkung bevorzugt in die Ursprungslage und/oder Ursprungsform zurückzukehrt.

Der Vorsprung ist einem axialen Abschnitt des Ringelementes zugeordnet, so dass der Materialabschnitt des Sicherungsteils gegen die Kraft des Vorsprungs in die Sperrposition gebracht wird, um die Sperre gegen ein Herausbewegen des Ringelementes aus der Aufnahme des Anschlussteils auszubilden. Bei eingebrachtem Ringelement in die Aufnahme des Anschlussteils befindet sich der axiale Abschnitt des Ringelementes in dem Zwischenraum zwischen der Umfangswandung der Aufnahme und dem Rohr.

Durch den Vorsprung ist einem möglichen Lösen des Ringelementes aus seiner Zielposition bezüglich des Rohres und einer damit möglicherweise einhergehenden Undichtigkeit zwischen den Verbindungspartnern entgegengewirkt. Ein solches Lösen kann durch ein mögliches Rückfedern, insbesondere geringfügiges Rückfedern des Materialabschnittes nach seiner Verformung in die Sperrposition auftreten. Durch dieses Rückfedern kann ein ungewolltes axiales Spiel zwischen dem Materialabschnitt und dem Ringelement entstehen, so dass das Ringelement sich in axialer Richtung aus seiner Zielposition geringfügig herausbewegen kann. Durch den Vorsprung wirkt eine Rückstellkraft als Vorspannkraft auf den verformten Materialabschnitt einerseits und auf das Ringelement andererseits, so dass bei auftretendem Rückfedern des verformten Materialabschnittes einem möglichen Spiel zwischen dem Ringelement und dem Materialabschnitt entgegengewirkt ist oder ein solches Spiel gänzlich vermieden ist.

Der Vorsprung kann in axialer Richtung federelastisch bewegbar und/oder federelastisch verformbar sein. Der Vorsprung kann um den Außenumfang des Ringelementes umlaufen, beispielsweise vollständig umlaufen oder mit wenigstens einer Unterbrechung umlaufen. Beispielsweise ist der Vorsprung an dem Ringelement, insbesondere dem Außenumfang des Ringelementes angeformt. Beispielsweise ist das Ringelelement mit dem Vorsprung aus einem Federstahl hergestellt oder weist einen Federstahl auf. Beispielsweise ist der Vorsprung als umlaufender Kragen oder Steg oder als umlaufende Rippe ausgebildet.

Bei einer weiteren Ausführungsform weist die Aufnahme eine Vertiefung auf. Insbesondere ist die Vertiefung um die Mittelachse umlaufend. Bei der Vertiefung handelt es sich um eine radiale Vertiefung. Darunter ist zu verstehen, dass sich die Vertiefung in radialer Richtung bezüglich der Mittelachse der Aufnahme vertieft. Beispielsweise ist die Vertiefung an der Umfangswandung der Aufnahme vorgesehen. Beispielsweise ist die Vertiefung im Bereich der Bodenfläche der Aufnahme vorgesehen. Beispielsweise bildet eine Seitenfläche der Vertiefung eine radiale Verlängerung der Bodenfläche, um die Kontaktfläche zwischen dem Rohr bzw. der Erhebung und der Bodenfläche und damit die dichtende Fläche zu vergrößern.

Das Ringelement ist eingerichtet, in den Zwischenraum zwischen der Umfangswandung der Aufnahme und dem Rohr in die Aufnahme derart eingebracht zu werden, dass ein axiales Ende des Ringelementes gegen die Erhebung des Rohres drückt, um eine Umformung der Erhebung unter einem Einfließen von Umformmaterial in die Vertiefung der Aufnahme zu bewirken.

Bei dieser Ausführungsform ist durch die Vertiefung ein Bereich vorgegeben, in welchen beim Umformen der Erhebung zumindest ein Teil des Werkstoffs bzw. Umformmaterials gezielt einfließen kann. Dies ermöglicht eine Verankerung des Rohres in der Aufnahme und/oder einen axial wirkenden Formschluss oder zumindest einen axial wirkenden Kraftschluss des Rohres in der Aufnahme wenigstens entgegen der Einsteckrichtung. Darüber hinaus ist es dadurch begünstigt, das Rohr mit seiner Erhebung in Anlage gegen die Bodenfläche zu halten. Dadurch wiederum ist es begünstigt, eine fluiddichte Verbindung zwischen dem Rohr und dem Anschlussteil dauerhaft aufrecht zu erhalten.

Eine solche Umformung der Erhebung kann in einfacher Weise durch ein Presswerkzeug oder dergleichen Werkzeug erreicht werden. Beispielsweise bedarf es dazu lediglich, dass eine Umformkraft in axialer Richtung bzw. in Einsteckrichtung aufzubringen ist.

Sofern die Erhebung des Rohres als Ausbuchtung ausgebildet ist, kann auf diese Weise die Ausbuchtung des Rohres in axialer Richtung gestaucht werden, insbesondere zusammengestaucht werden. Dadurch ist es begünstigt, einen um das Rohr verlaufenden Rohrbund massiv auszubilden, durch welchen die Dichtfunktion der Verbindung zwischen dem Rohr und dem Anschlussteil verbessert ist.

Bei einer weiteren Ausführungsform ist das Ringelement als Klemmring und/oder Stauchring ausgebildet. Eine mögliche Ausgestaltung besteht darin, dass das Ringelement einen Verformungsabschnitt aufweist. Beispielsweise handelt es sich bei dem Verformungsabschnitt um einen Endabschnitt des Ringelementes, insbesondere einen axialen Endabschnitt des Ringelementes. Beispielsweise ist der Verformungsabschnitt an einem Endabschnitt des Ringelementes angeordnet, welcher bei einem Einstecken in die Aufnahme des Anschlussteils der Aufnahme zugewandt ist und/oder zuerst eingesteckt wird. Der Verformungsabschnitt besteht aus einem verformbaren Material oder weist ein verformbares Material auf. Beispielsweise ist das Material plastisch oder elastisch verformbar. Der Verformungsabschnitt ist eingerichtet, in radialer Richtung gestaucht zu werden.

Die Umfangswandung der Aufnahme ist über einen axialen Längenabschnitt eingerichtet, als Matrize für den Verformungsabschnitt des Ringelementes zu wirken bzw. genutzt zu werden, um den Verformungsabschnitt in Anlage gegen eine Flanke der Erhebung zu bringen. Beispielsweise ist die Flanke eine Seitenfläche der Erhebung, welche quer zur Mittelachse der Aufnahme verläuft.

Durch den Verformungsabschnitt des Ringelementes und den als Matrize geeigneten axialen Längenabschnitt der Umfangswandung der Aufnahme ist es ermöglicht, unter Verformung des Verformungsabschnitts das Ringelement in die Aufnahme einzustecken und damit beispielsweise einen in axialer Richtung wirkenden Kraftschluss zwischen der Aufnahme und dem Ringelement zu erreichen. In diesem Fall wirkt dieser Kraftschluss einem Herausbewegen des Ringelementes aus der Aufnahme entgegen.

Sofern das Rohr weitere Erhebungen aufweist und diese weiteren Erhebungen in axialer Richtung gesehen, hintereinanderliegend angeordnet sind und an dem einzusteckenden Längenabschnitt des Rohres vorliegen, kann im Zuge eines Einführens des Ringelementes und unter Verformung des Verformungsabschnitts ein in axialer Richtung wirkender Kraftschluss zwischen der Aufnahme und dem Ringelement und ergänzend zwischen dem Ringelement und dem Rohr erreicht werden. Der Kraftschluss zwischen dem Ringelement und dem Rohr ist beispielsweise zu erreichen, indem der Verformungsabschnitt gegen die Scheitelfläche wenigstens einer der weiteren Erhebungen in Anlage, insbesondere in Pressanlage gelangt.

Es kann vorgesehen sein, dass die Aufnahme über den einen als Matrize wirkenden axialen Längenabschnitt sich in Richtung zu der Bodenfläche hin verjüngt. Dadurch ist es begünstigt, dass der als Matrize wirkende axiale Längenabschnitt zusätzlich eine Führungsfunktion beim Einbringen des Ringelementes in die Aufnahme ausübt, um das eingeführte Ende des Ringelementes gegen oder in Richtung gegen eine Flanke der Erhebung des Rohres zu führen.

Durch die Verjüngung des axialen Längenabschnitts kann also erreicht werden, dass der Verformungsabschnitt in der Weise radial nach innen umgeformt wird, dass der Verformungsabschnitt auf die Flanke der Erhebung auftrifft, jedoch die weiteren Erhebungen umfangsmäßig umgibt, also allenfalls ein Kraftschluss in radialer Richtung zwischen dem Ringelement und der Scheitelfläche wenigstens einer der weiteren Erhebungen vorliegt. Beispielsweise ist die Umfangswandung der Aufnahme über den einen als Matrize wirkenden axialen Längenabschnitt als Schrägfläche ausgebildet. Dadurch ist es begünstigt die vorstehenden Effekte in technisch einfacher Weise zu realisieren.

Es kann vorgesehen sein, dass der eine als Matrize wirkende axiale Längenabschnitt der Umfangswandung zwischen der Vertiefung und dem einen zu der vorstehend beschriebenen Sperre umformbaren axialen Längenabschnitt der Umfangswandung angeordnet ist. Beispielsweise ist der eine als Matrize wirkende axiale Längenabschnitt der Umfangswandung der vorstehend beschriebene benachbarte Längenabschnitt.

Bei einer weiteren Ausführungsform weist das Ringelement eine quer zur Mittelachse verlaufende Drückfläche auf und das Anschlussteil hat eine quer zur Mittelachse verlaufende Gegenfläche. Die Gegenfläche ist eingerichtet, als Widerlagerfläche für eine Drückvorrichtung, wie beispielsweise eine Pressvorrichtung, genutzt zu werden, um eine Druckkraft auf die Drückfläche des Ringelementes auszuüben. Dadurch ist eine technisch einfache Handhabung begünstigt, um das Ringelement in die Aufnahme einzubringen und in eine gewünschte Position in der Aufnahme und/oder zwischen der Umfangswandung der Aufnahme und dem eingesteckten Längenabschnitt des Rohres zu positionieren.

Beispielsweise ist die Drückfläche an der Berandung des Ringelementes ausgebildet oder durch die Berandung des Ringelementes zumindest teilweise gebildet. Beispielsweise ist die Gegenfläche an einer Flanke und/oder Seitenfläche eines Einschnitts oder Hinterschnitts oder eines Bundes des Anschlussteiles ausgebildet oder dadurch zumindest teilweise gebildet.

Bei einer weiteren Ausführungsform weist das Sicherungsteil eine Drückfläche und/oder eine Drückkante auf, um durch Ausüben einer Druckkraft darauf die Verformung des Materialabschnittes zur Ausbildung der vorstehend beschriebenen Sperre zu bewirken. Insbesondere sind die Drückfläche und/oder die Drückkante ausgebildet und/oder angeordnet, um eine orthogonal zur Mittelachse der Aufnahme oder schräg zur Mittelachse der Aufnahme wirkende Druckkraft aufzunehmen. Insbesondere ist die Drückfläche parallel zur Mittelachse oder schräg zur Mittelachse der Aufnahme angeordnet. Insbesondere ist die Drückfläche an dem Außenumfang des Sicherungsteils ausgebildet oder durch einen_Außenumfangsabschnitt des Sicherungsteils gebildet. Insbesondere handelt es sich bei der Drückkante um eine stirnseitige Kante, vorzugsweise am Außenumfang des Sicherungsteils.

Beispielsweise hat das Anschlussteil eine quer zur Mittelachse verlaufende Gegenfläche. Insbesondere ist die Gegenfläche eingerichtet, als Widerlagerfläche für eine Drückvorrichtung, wie beispielsweise eine Pressvorrichtung, genutzt zu werden, um die Druckkraft auf die Drückfläche bzw. die Drückkante des Sicherungsteils auszuüben. Dadurch ist eine technisch einfache Handhabung begünstigt, um den Materialabschnitt des Sicherungsteiles in eine gewünschte Form umzuformen, beispielsweise um den Materialabschnitt radial nach innen gerichtet umzuformen, so dass eine Sperre gegen ein Herausbewegen des Ringelementes aus der Aufnahme gebildet ist. Beispielsweise ist die Gegenfläche an einer Flanke und/oder Seitenfläche eines Einschnitts oder Hinterschnitts oder eines Bundes des Anschlussteiles ausgebildet oder dadurch zumindest teilweise gebildet.

Das Anschlussteil kann ein metallisches Material enthalten oder daraus bestehen. Beispielsweise weist das Anschlussteil ein Metall oder eine Metalllegierung auf oder besteht daraus. Grundsätzlich kann das Anschlussteil auch aus einem Kunststoffmaterial bestehen oder ein Kunststoffmaterial aufweisen.

Das Material des Ringelementes kann ein metallisches Material sein, welches ein Metall oder eine Metalllegierung aufweist oder aus einem Metall oder einer Metalllegierung besteht. Beispielsweise ist das Material des Ringelementes ein Messingmaterial oder ein Stahlmaterial oder ein Edelstahlmaterial. Grundsätzlich kann das Material des Ringelements auch ein Kunststoffmaterial sein, welches einen Kunststoff aufweist oder aus einem Kunststoff besteht. Beispielsweise ist das Material des Ringelementes ein Duroplast.

Das Material des Materialabschnitts kann ein metallisches Material sein, welches ein Metall oder eine Metalllegierung aufweist oder aus einem Metall oder einer Metalllegierung besteht. Grundsätzlich kann das Material des Materialabschnitts auch ein Kunststoffmaterial sein, welches einen Kunststoff aufweist oder aus einem Kunststoff besteht. Beispielsweise ist das Material des Materialabschnitts ein Duroplast. Beispielsweise ist der Materialabschnitt an das Anschlussteil angespritzt.

Bei einer weiteren Ausführungsform weist das Anschlussteil eine mit der Aufnahme, beispielsweise über einen Kanal, strömungsverbundene Koppelstelle auf, um das Anschlussteil mit einem Anschluss einer weiteren Vorrichtung zu koppeln. Beispielsweise weist die Koppelstelle ein Gewinde auf, um das Anschlussteil durch Verschrauben oder eine Verschraubung an dem Anschluss der weiteren Vorrichtung anzubinden.

Beispielsweise weist die Koppelstelle eine mit einem Innengewinde versehene Bohrung auf, um das Anschlussteil durch Verschrauben oder eine Verschraubung an dem Anschluss der weiteren Vorrichtung anzubinden. Insbesondere hat der Außenumfang des Anschlussteils einen Längenabschnitt, welcher im Querschnitt eckig, insbesondere mehreckig, beispielsweise viereckig oder sechseckig, ausgebildet ist, um daran einen Schraubenschlüssel oder dergleichen Werkzeug ansetzen zu können.

Bei einer weiteren Ausführungsform ist die Anschlussvorrichtung als Verbinder zum Verbinden der Enden von zwei Rohren mit Erhebung ausgebildet. Insbesondere ist es dazu vorgesehen, dass das Anschlussteil eine mit der Aufnahme, beispielsweise über einen Kanal, strömungsverbundene weitere Aufnahme hat und ein mit der weiteren Aufnahme zusammenwirkendes weiteres Ringelement vorgesehen ist. Die weitere Aufnahme kann entsprechend der vorstehend beschriebenen Aufnahme ausgebildet sein. Das weitere Ringelement kann entsprechend dem vorstehend beschriebenen Ringelement ausgebildet sein.

Nach einem weiteren Aspekt wird eine Verbindungsanordnung vorgeschlagen, welche die vorstehend beschriebene Anschlussvorrichtung und ein daran angeschlossenes Rohr mit außenumfangsseitiger Erhebung umfasst. Das Rohr kann das vorstehend beschriebene Rohr sein.

Beispielsweise ist das Rohr ein Wellrohr. Unter der Bezeichnung "Wellrohr" ist in der vorliegenden Offenbarung ein Rohr zu verstehen, welches einen wellenförmig wechselnden Durchmesser aufweist. Eine Welle des Wellrohres umfasst einen Wellenscheitel, wobei in axialer Richtung gesehen, sich daran eine Flanke anschließt, welche in ein Wellental mündet, von dem dann ein Scheitel einer weiteren Welle ausgeht. Bevorzugt ist das Wellrohr durch diese Wellung in einem gewissen Maße biegsam. Im Zuge der vorliegenden Offenbarung ist unter der Bezeichnung "Wellrohr" auch ein Wellschlauch umfasst.

Nach einem weiteren Aspekt wird eine Verwendung der vorstehend beschriebenen Anschlussvorrichtung zum Anschließen eines Rohres mit außenumfangsseitiges Erhebung vorgeschlagen. Beispielsweise ist das Rohr ein Wellrohr. Das Rohr kann das vorstehend beschriebene Rohr bzw. Wellrohr sein. Bevorzugt ist das Rohr ein metallisches Rohr. Grundsätzlich kann das Wellrohr auch ein Kunststoff-Wellrohr sein.

Nach einem weiteren Aspekt wird eine Verwendung der vorstehend beschriebenen Anschlussvorrichtung zum Verbinden eines Rohres mit einer, einen technischen Prozess ausführenden Vorrichtung vorgeschlagen, um über das Rohr ein Fluid der Vorrichtung zuzuführen oder ein Fluid aus der Vorrichtung abzuführen. Die Vorrichtung kann eine wärmetechnische Anlage oder eine kältetechnische Anlage sein. Beispielsweise ist die Vorrichtung eine Klimaanlage und/oder eine Wärmpumpe. Das Rohr ist beispielsweise zum Transportieren von Kältemittel geeignet oder genutzt. Auch ist das Rohr beispielsweise zum Transportieren von leichtflüchtigen und/oder gasförmigen Medien, wie beispielsweise Wasserstoff, geeignet oder genutzt.

Nach einem weiteren Aspekt wird ein Verfahren zum Montieren eines Rohres mit umfangsseitiger Erhebung an einem Anschlussteil vorgeschlagen. Das Verfahren umfasst die Schritte:
i) Bereitstellen der vorstehend beschriebenen Anschlussvorrichtung;
ii) Einstecken eines die Erhebung aufweisenden Längenabschnitts des Rohres in die Aufnahme des Anschlussteils der Anschlussvorrichtung;
iii) Einbringen des Ringelementes der Anschlussvorrichtung in einen Zwischenraum zwischen der Umfangswandung der Aufnahme und dem Rohr, so dass ein axiales Ende des Ringelementes als Sperre für die Erhebung wirkt, um das Rohr gegen ein Herausbewegen aus der Aufnahme zu sichern;
iv) Umformen des Materialabschnitts des Sicherungsteils der Anschlussvorrichtung von einer Ausgangsform in eine sperrende Form, wobei in der Ausgangsform eine zum Einstecken des Rohres genutzte Einstecköffnung freigegeben ist und in der sperrenden Form die Einstecköffnung versperrt ist, so dass eine Sperre gegen ein Herausbewegen des Ringelementes aus der Aufnahme vorliegt.

Bei dem Verfahren wird der Materialabschnitt radial nach innen in Richtung zu der Mittelachse der Aufnahme umgeformt, um die Sperre gegen ein Herausbewegen des Ringelementes aus der Aufnahme auszubilden, also die sperrende Form zu erreichen.

Nach einer Weiterbildung wird in dem Schritt ii) das Ringelement in den Zwischenraum zwischen der Umfangswandung der Aufnahme und dem Rohr derart eingebracht, dass ein axiales Ende des Ringelementes gegen die Erhebung des Rohres drückt, um eine Umformung der Erhebung, insbesondere unter einem Einfließen von Umformmaterial in die radiale Vertiefung der Aufnahme, zu bewirken.

Durch das Verfahren ist eine einfach zu handhabende Montage des Rohres an dem Anschlussteil begünstigt, um eine dauerhaft haltbare und dichte Verbindung zwischen dem Rohr und dem Anschlussteil zu erreichen. Insbesondere ist auf diesem Wege eine unlösbare Verbindung zwischen dem Rohr und dem Anschlussteil zu erreichen.

Es wird auf die im Zusammenhang mit der Anschlussvorrichtung beschriebenen Vorteile verwiesen, welche grundsätzlich auch bei dem Verfahren zugrunde liegen.

Weitere Einzelheiten und Merkmale ergeben sich aus der nachfolgenden Beschreibung mehrerer Ausführungsbeispiele anhand der Zeichnung. Es zeigen
- Fig. 1: eine mögliche Ausführungsform einer Anschlussvorrichtung zum Anschließen eines Rohres mit außenumfangsseitiger Erhebung in einem Montagezustand als Teilschnitt,
- Fig. 2: die Anschlussvorrichtung der Figur 1 in einem montierten Endzustand als Teilschnitt,
- Fig. 3: eine weitere mögliche Ausführungsform einer Anschlussvorrichtung zum Anschließen eines Rohres mit außenumfangsseitiger Erhebung als Teilschnitt,
- Fig. 4: die Anschlussvorrichtung der Figur 3 in einer Explosionsdarstellung,
- Fig. 5: eine weitere mögliche Ausführungsform einer Anschlussvorrichtung zum Anschließen eines Rohres mit außenumfangsseitiger Erhebung in einem Montagezustand und
- Fig. 6: die Anschlussvorrichtung der Figur 5 in einem montierten Endzustand.

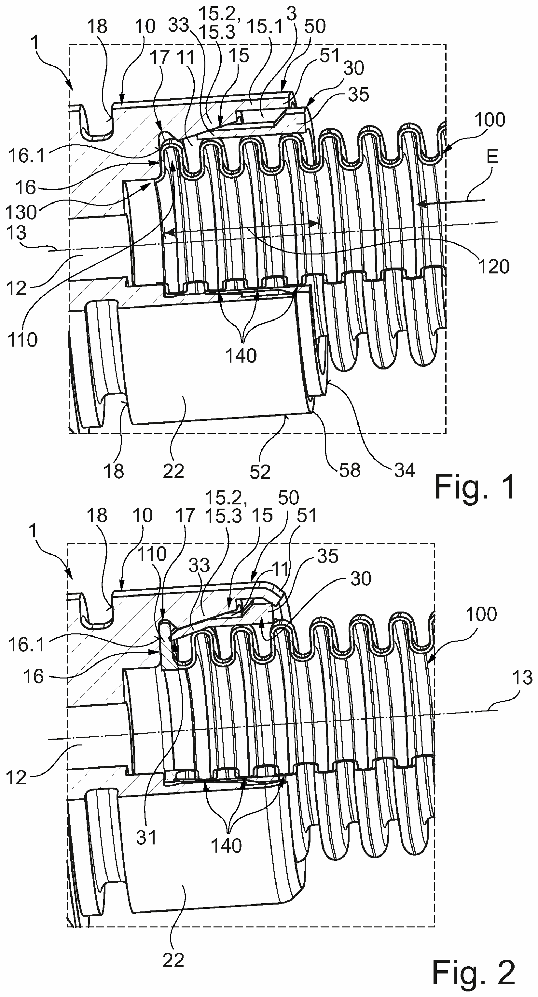

Figuren 1 und 2 zeigen eine mögliche Ausführungsform einer Anschlussvorrichtung 1 in einer perspektivischen Darstellung als Teilschnitt. Die Anschlussvorrichtung 1 ist zum Anschließen eines Rohres 100 mit außenumfangsseitiger Erhebung 110, wie beispielsweise einem Wellrohr, geeignet. Die Figur 1 zeigt die Anschlussvorrichtung 1 zusammen mit einem solchen Rohr 100 in einem Montagezustand. Die Figur 2 zeigt die Anschlussvorrichtung 1 und das Rohr 100 in einem montierten Endzustand. In den Figuren 1 und 2 ist die Anschlussvorrichtung 1 beispielhaft als Ausschnitt eines Anbindungsbereichs mit dem Rohr 100 dargestellt.

Die Anschlussvorrichtung 1 umfasst ein Anschlussteil 10 mit einer Aufnahme 11, um darin einen die Erhebung 110 aufweisenden Längenabschnitt 120 des Rohres 100 einzustecken. Bevorzugt ist der Längenabschnitt 120 ein Endabschnitt. Bevorzugt umfasst der Längenabschnitt 120 ein Ende 130 des Rohres 100.

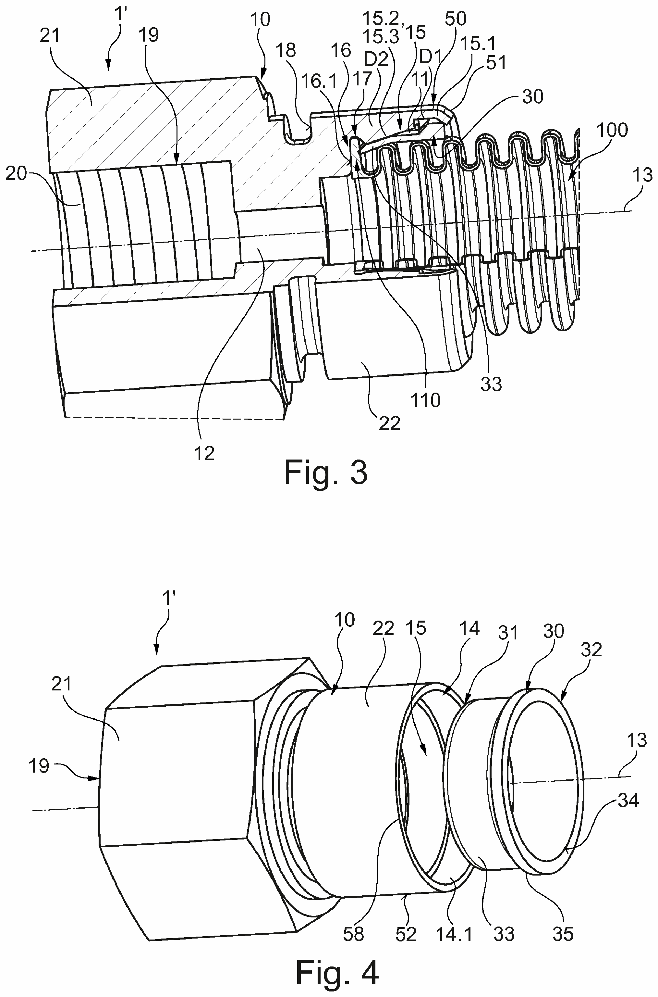

Bevorzugt ist die Aufnahme 11 über einen Kanal 12 mit einer (in den Figuren 1 und 2 nicht dargestellten) Koppelstelle des Anschlussteils 10 strömungsverbunden. Die Aufnahme 11 hat eine in eine Einsteckrichtung E verlaufende Mittelachse 13. Die Aufnahme 11 weist eine Einstecköffnung 14 mit einer quer zur Mittelachse 13 angeordneten Öffnungsfläche 14.1 auf (Figur 4). Die Aufnahme 11 ist durch eine um die Mittelachse 13 verlaufende Umfangswandung 15 begrenzt. Die Aufnahme 11 weist einen Boden 16 auf, welcher eine quer zur Mittelachse 13 angeordnete Bodenfläche 16.1 hat, um daran die Erhebung 110 des Rohres 100 in Anlage zu bringen.

Bevorzugt ist das Anschlussteil 10 zumindest im Bereich der Aufnahme 11 rotationssymmetrisch bezüglich der Mittelachse 13 der Aufnahme 11 ausgebildet, beispielsweise hülsenförmig oder rohrförmig ausgebildet. Beispielsweise weist das Anschlussteil 10 zumindest im Bereich der Aufnahme 11 einen in axialer Richtung gleichförmig verlaufenden Außenumfang auf. Beispielsweise hat das Anschlussteil 10 zumindest im Bereich der Aufnahme 11 einen gleichbleibenden Radius in Bezug auf die Mittelachse 13 der Aufnahme 11.

Die Anschlussvorrichtung 1 umfasst ein Ringelement 30. Das Ringelement 30 ist eingerichtet, den Längenabschnitt 120 des Rohres 100 zumindest teilweise zu umgeben bzw. zu umgreifen. Das Ringelement 30 ist eingerichtet, in den Zwischenraum 3 derart eingesteckt zu werden, dass ein axiales Ende 31 des Ringelementes 30 als Sperre für die Erhebung 110 wirkt, um das Rohr 100 gegen ein Herausbewegen aus der Aufnahme 11 zu sichern, insbesondere formschlüssig zu sichern.

Die Anschlussvorrichtung 1 umfasst ferner ein Sicherungsteil 50, welches dem Anschlussteil 10 zugeordnet ist. Das Sicherungsteil 50 hat einen Materialabschnitt 51, welcher ein umformbares Material aufweist oder aus einem solchen umformbaren Material besteht. Der Materialabschnitt 51 ist um die Mittelachse 13 der Aufnahme 11 umlaufend ausgebildet. Der Materialabschnitt 51 bildet einen das Rohr 100 zumindest teilweise umgreifenden Ring. Der Materialabschnitt 51 ist eingerichtet, radial bezüglich der Mittelachse 13 nach innen umgeformt zu werden, um eine Sperre gegen ein Herausbewegen des Ringelementes 30 aus der Aufnahme 11 auszubilden (Figur 2).

Wie aus den Figuren 1 und 2 ersichtlich ist, ist das Sicherungsteil 50 an dem Anschlussteil 10 ausgebildet. Das Sicherungsteil 50 ist an dem Anschlussteil 10 angeformt. Ferner ist der Materialabschnitt 51 des Sicherungsteils 50 an einem axialen Längenabschnitt 15.1 der Umfangswandung 15 der Aufnahme 11 ausgebildet. Um eine Umformung zu erleichtern, ist die Umfangswandung 15 der Aufnahme 11 in einem Bereich des axialen Längenabschnitts 15.1 mit einer Wanddicke D1 versehen, welche kleiner als die Wanddicke D2 der Umfangswandung 15 in einem benachbarten axialen Längenabschnitt 15.2 ist, der sich in Richtung der Bodenfläche 16.1 erstreckt (Figuren 1 und 3).

Wie insbesondere aus der Figur 1 ersichtlich ist, weist die Aufnahme 11 eine um die Mittelachse 13 umlaufende, radiale Vertiefung 17 im Bereich der Bodenfläche 16.1 auf. Die Vertiefung 17 kann eine Materialausnehmung sein, beispielsweise durch einen Hinterschnitt oder Einschnitt gebildet sein. Die Vertiefung 17 ist der Umfangswandung 15 der Aufnahme 11 zugeordnet, insbesondere dort ausgebildet. Beispielsweise bildet eine Seitenwandung der Vertiefung 17 eine radiale Erweiterung der Bodenfläche 16.1 der Aufnahme 11, also eine Erweiterung der Bodenfläche 16.1 der Aufnahme 11 in radialer Richtung bezüglich der Mittelachse 13.

Wie insbesondere aus der Figur 2 ersichtlich ist, kann die Vertiefung 17 genutzt werden, um Umformmaterial aufzunehmen, welches von einer gewollten Umformung des Rohres 100 im Bereich der Erhebung 110 resultiert. Dadurch ist es ermöglicht, dass aufgrund der Vertiefung 17 eine Verankerung des Rohres 100 in der Aufnahme 11 erreicht wird, so dass ein in axialer Richtung wirkender Formschluss vorliegt. Um dies zu erreichen, ist das Ringelement 30 eingerichtet, in dem Zwischenraum 3 zwischen der Umfangswandung 15 der Aufnahme 11 und dem Rohr 100 in die Aufnahme 11 derart eingebracht zu werden, dass das axiale Ende 31 des Ringelementes 30 gegen die Erhebung 110 des Rohres 100 drückt, um auf diese Weise eine Umformung der Erhebung 110 unter einem Einfließen von Umformmaterial in die Vertiefung 17 der Aufnahme 11 zu bewirken.

Wie insbesondere aus den Figuren 1 und 2 ersichtlich ist, hat das Ringelement 30 einen Verformungsabschnitt 33, welcher ein verformbares Material hat oder daraus besteht und eingerichtet ist, in radialer Richtung gestaucht zu werden. Dementsprechend ist die Umfangswandung 15 der Aufnahme 11 zumindest über einen axialen Längenabschnitt 15.3 eingerichtet, als Klemmfläche für den Verformungsabschnitt 33 zu wirken. Dadurch ist es ermöglicht, dass bei einem Einstecken des Ringelementes 30 in die Aufnahme 11 der Verformungsabschnitt 33 entlang des axialen Längenabschnitts 15.3 der Umfangswandung 15 unter einer radialen Umformung entlang gleitet und dabei eine Klemmung des Verformungsabschnitts 33 gegen den axialen Längenabschnitt 15.3 stattfindet. Auf diese Weise ist beispielsweise ein in axialer Richtung wirkender Kraftschluss erreicht, durch welchen das Ringelement 30 gegen ein Herausbewegen aus der Aufnahme 11 kraftschlüssig gesichert ist.

Ergänzend ist die Umfangswandung 15 der Aufnahme 11 zumindest den axialen Längenabschnitt 15.3 eingerichtet, als Matrize für den Verformungsabschnitt 33 des Ringelementes 30 zu wirken. Die Umfangswandung 15 ist über diesen axialen Längenabschnitt 15.3 derart als Matrize ausgebildet, dass bei einem Einstecken des Ringelementes 30 in die Aufnahme 11 der Verformungsabschnitt 33 durch die Matrize soweit radial nach innen gerichtet umgeformt wird, dass der Verformungsabschnitt 33 in Anlage gegen eine Flanke der Erhebung 110 gebracht wird oder zumindest in Richtung gegen die Flanke der Erhebung 110 weist. Eine solche Umformung bietet sich an, wenn das Rohr 100 noch weitere Erhebungen 140 aufweist, welche in Richtung der Längserstreckung des Rohres 100 gesehen und ausgehend von der Erhebung 110 hintereinanderliegend angeordnet sind. Ein derartiges Rohr 100 kann ein Wellrohr sein.

Der als Matrize wirkende axiale Längenabschnitt 15.3 der Umfangswandung 15 ist dazu in der Weise ausgebildet, dass der Verformungsabschnitt 33 des Ringelementes 30 zwar stirnseitig in Anlage gegen die eine Flanke der Erhebung 110 gebracht wird oder zumindest in Richtung gegen die eine Flanke der Erhebung 110 weist, die weiteren Erhebungen 140 jedoch von dem Verformungsabschnitt 33 umgriffen sind bzw. mit ihrer Scheitelfläche in Richtung gegen den Innenumfang des Ringelementes 30 weisen. Auch ist es vorgesehen, dass der Verformungsabschnitt 33 sich in einer Klemmverbindung einerseits gegenüber der Umfangswandung 15 der Aufnahme 11, insbesondere dem axialen Längenabschnitt 15.3, und andererseits gegenüber dem Rohr 100 befindet, sodass das Rohr 100 und das Ringelement 30 in der Aufnahme 11 gegen ein Herausbewegen kraftschlüssig gehalten sind.

Um die vorstehend beschriebene Umformung bzw. Verformung des Verformungsabschnitts 33 zu erreichen, ist die Aufnahme 11 über den einen axialen Längenabschnitt 15.3 in Richtung der Bodenfläche 16.1 hin verjüngend ausgebildet. Beispielsweise ist die Umfangswandung 15 der Aufnahme 11 über den einen axialen Längenabschnitt 15.3 als Schrägfläche ausgebildet.

Das Ringelement 30 weist einen ringförmigen Grundkörper 35 auf. Daran ist der Verformungsabschnitt 33 angeordnet, insbesondere angeformt. Der Verformungsabschnitt 33 schließt sich in Richtung einer Mittelachse des Ringelementes 30 an den Grundkörper 35 an. Der Grundkörper 35 ist gegenüber dem Verformungsabschnitt 33 dickwandiger ausgebildet. Bevorzugt ist die axiale Erstreckung des Verformungsabschnitts 33 in Richtung der Mittelachse des Ringelementes 30 größer als die axiale Erstreckung des Grundkörpers 35.

Das Ringelement 30 weist eine Drückfläche 34 auf, gegen welche eine in Einsteckrichtung E wirkende Druckkraft aufgebracht werden kann, um das Ringelement 30 in die Aufnahme 11 des Anschlussteils 10 einzubringen. Die Drückfläche 34 verläuft quer zur Mittelachse des Ringelementes 30. Die Drückfläche 34 ist an dem Grundkörper 35 des Ringelementes 30 ausgebildet. Die Drückfläche 34 ist an einem Ende 32 des Ringelementes 30 ausgebildet, welches dem Einführende 31 des Ringelementes 30 gegenüberliegend angeordnet ist (Figur 4).

Um die vorstehend beschriebene Umformung des Materialabschnittes 51 zum Ausbilden der axialen Sperre für das Ringelement 30 zu realisieren, ist eine Drückfläche 52 und/oder eine Drückkante 58 vorgesehen. Die Drückfläche 52 bzw. die Drückkante 58 sind derart angeordnet, dass durch Ausüben einer Druckkraft darauf oder dagegen der Materialabschnitt 51 radial nach innen gerichtet umgeformt wird und dadurch die Sperre gebildet wird. Die Umformung kann auf ein Bördeln oder eine sonstige Kaltumformung des Materialabschnitts 51 beruhen.

Die Drückfläche 52 ist an dem Außenumfang des Sicherungsteils 50 ausgebildet oder durch einen Außenumfangsabschnitt des Sicherungsteils 50 gebildet. Beispielsweise ist die Drückfläche 52 im Bereich der Berandung der Einstecköffnung 14 angeordnet. Bevorzugt handelt es sich bei der Drückkante 58 um eine stirnseitige Kante, vorzugsweise_am Außenumfang des Sicherungsteils 50. Beispielsweise ist die Drückkante 58 im Bereich der Berandung der Einstecköffnung 14 angeordnet und/oder durch die Außenkante der Berandung gebildet oder daran ausgebildet.

Eine mögliche Funktionsweise der Anschlussvorrichtung 1 der Figuren 1 und 2 zum Anschließen des vorstehend beschriebenen Rohres 100 wird nachfolgend kurz erläutert:
Es wird das Rohr 100 in die Aufnahme 11 des Anschlussteils 10 eingesteckt, so dass die Erhebung 110 des Einsteckrohres 100 mit einer Flanke gegen die Bodenfläche 16.1 der Aufnahme 11 in Anlage gebracht ist (Figur 1). Anschließend wird das Ringelement 30 in den Zwischenraum 3 zwischen der Umfangswandung 15 der Aufnahme 11 und dem Rohr 100 eingebracht. Beispielsweise wird dazu eine Druckkraft auf die Drückfläche 34 des Ringelementes 30 in Einsteckrichtung E aufgebracht.

Bevorzugt wird eine so hohe Druckkraft aufgebracht, dass das Ringelement 30 unter einer radial nach innen gerichteten Umformung entlang des als Matrize wirkenden axialen Längenabschnitts 15.3 der Aufnahme 11 bewegt wird und mit dem einen axialen Ende 31 gegen die Erhebung 110 des Rohres 100, vorzugsweise unter Überbrückung der weiteren Erhebungen 140, soweit vorhanden, drückt.

Die Druckkraft ist ferner so hoch bemessen, dass es zu einer axialen Stauchung der Erhebung 110 kommt, und zwar in der Weise, dass Umformmaterial in die radiale Vertiefung 17 der Aufnahme 11 einfließt und es zu einer Verankerung des Rohres 100 in der Vertiefung 17 kommt. Dadurch ist eine dauerhafte Verankerung des Rohres 100 in der Aufnahme 11 des Anschlussteils 10 erreicht. Darüber hinaus bildet die Bodenfläche 16.1 zusammen mit der daran anliegenden Flanke der Erhebung 110 des Rohres 100 eine fluiddichte Abdichtung zwischen dem Rohr 100 und dem Anschlussteil 10 aus.

In einem weiteren Schritt wird nunmehr der Materialabschnitt 51 des Sicherungsteils 50 von seiner Ausgangsform in eine sperrende Form umgeformt. In der Ausgangsform ist die Einstecköffnung 14 der Aufnahme 11 durch den Materialabschnitt 51 freigegeben, wohingegen in der sperrenden Form die Einstecköffnung 14 durch den umgeformten Materialabschnitt 51 versperrt ist, so dass eine Sperre gegen ein Herausbewegen des Ringelementes 30 aus der Aufnahme 11 vorliegt. Dazu wird beispielsweise eine Druckkraft, vorzugsweise schräg angreifend, auf die Drückkante 58 aufgebracht. Ergänzend oder alternativ kann eine Druckkraft auf die Drückfläche 52 aufgebracht werden, welche orthogonal zur Mittelachse 13 oder schräg dazu gerichtet ist.

Die zum Anschließen des Rohres 100 an der Anschlussvorrichtung 1 benötigte Druckkraft kann durch eine Drückvorrichtung oder Pressvorrichtung erzeugt sein. Dazu kann die an dem Anschlussteil 10 vorgesehene Gegenfläche 18 als Widerlager für die Drückvorrichtung genutzt sein.

Figuren 3 und 4 zeigen eine weitere mögliche Ausführungsform einer Anschlussvorrichtung 1' in einem Teilschnitt (Figur 3) und in einer Explosionsdarstellung (Figur 4). Bauteile der Anschlussvorrichtung 1', welche mit Bauteilen der Anschlussvorrichtung 1 der Figuren 1 und 2 baugleich oder funktionsgleich sind, sind mit gleichen Bezugszeichen versehen; insofern wird auf die Beschreibung zu der Anschlussvorrichtung 1 der Figuren 1 und 2 verwiesen. In der Figur 3 befindet sich die Anschlussvorrichtung 1' in dem montierten Endzustand, wie er bereits in der Figur 2 dargestellt und zu der Anschlussvorrichtung 1 beschrieben ist.

Bei der Anschlussvorrichtung 1' ist beispielhaft das Anschlussteil 10 mit einer Koppelstelle 19 versehen, um das Anschlussteil 10 mit einem Anschluss einer weiteren Vorrichtung zu koppeln. Bevorzugt ist die Koppelstelle 19 mit der Aufnahme 11 über den Kanal 12 strömungsverbunden, um ein über das Rohr 100 und den Kanal 12 transportiertes Fluid oder Medium über die Koppelstelle 19 der weiteren Vorrichtung zuführen zu können oder davon abführen zu können.

Bevorzugt ist die Koppelstelle 19 an einem Fortsatz 21 ausgebildet, welcher an einem die Aufnahme 11 aufweisenden Basisabschnitt 22 angeordnet ist, insbesondere angeformt ist. Die Koppelstelle 19 kann eine mit einem Innengewinde 20 versehene Bohrung aufweisen, um das Anschlussteil 10 durch Verschrauben oder eine Verschraubung an dem Anschluss der weiteren Vorrichtung anzubinden. Um ein Verschrauben zu erleichtern, kann das Anschlussteil 10, beispielsweise im Bereich des Fortsatzes 21, einen eckigen Außenumfang aufweisen. Dadurch ist ein Werkzeug, wie beispielsweise ein Schraubenschlüssel, ansetzbar.

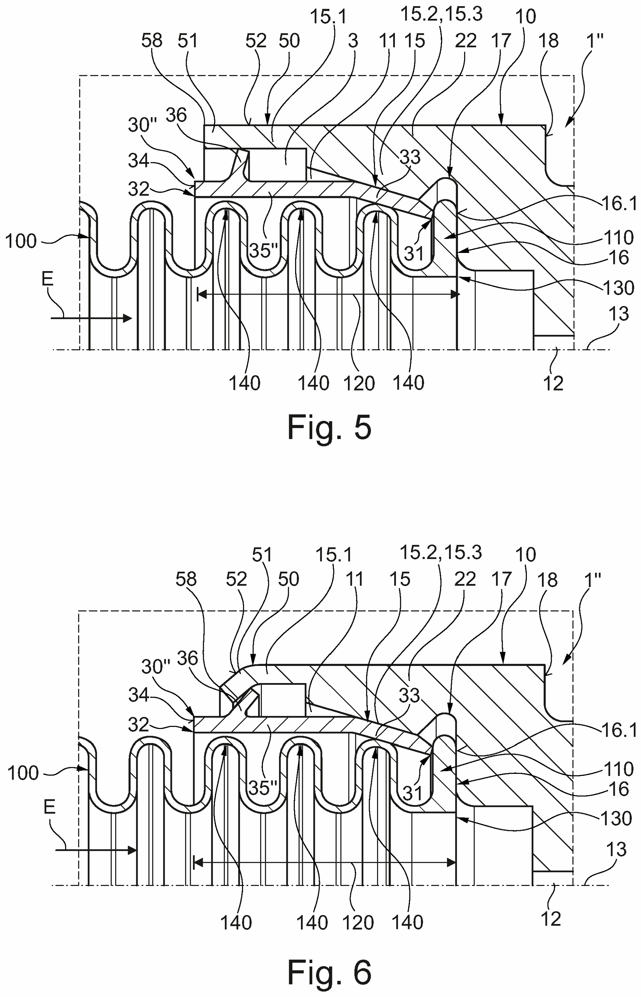

Figur 5 zeigt eine weitere mögliche Ausführungsform einer Anschlussvorrichtung 1" in einem Längsschnitt und in Darstellung einer Halbseite der Anschlussvorrichtung 1". Die Anschlussvorrichtung 1" kann eine Abwandlung der Anschlussvorrichtung 1 der Figuren 1 und 2 sein. Bauteile der Anschlussvorrichtung 1", welche mit Bauteilen der Anschlussvorrichtung 1 der Figuren 1 und 2 identisch oder funktionsgleich sind, sind mit gleichen Bezugszeichen versehen; insofern wird auf die Beschreibung zu der Anschlussvorrichtung 1 der Figuren 1 und 2 verwiesen.

Die Anschlussvorrichtung 1" der Figur 5 unterscheidet sich von der Anschlussvorrichtung 1 der Figuren 1 und 2 unter anderem dadurch, dass ein Ringelement 30'' mit einem radial nach außen stehenden und/oder nach außen ragenden Vorsprung 36 vorgesehen ist. Der Vorsprung 36 ist in axialer Richtung des Ringelementes 30'' elastisch bewegbar und/oder elastisch verformbar. Das Ringelement 30'' weist einen ringförmigen Grundkörper 35'' auf, an dem der Vorsprung 36 angeordnet, insbesondere angeformt ist. Bevorzugt ist daran ferner der Verformungsabschnitt 33 angeordnet, insbesondere angeformt. Bevorzugt schließt sich der Verformungsabschnitt 33 in Richtung einer Mittelachse des Ringelementes 30'' an den Grundkörper 35'' an oder bildet einen axialen Endabschnitt des Grundkörpers 35".

Der Vorsprung 36 ist einem axialen Abschnitt des Ringelementes 30'' zugeordnet. Bevorzugt ist der axiale Abschnitt in Einsteckrichtung E gesehen, hinter dem Verformungsabschnitt 33 angeordnet. Bevorzugt ist der Vorsprung 36 derart angeordnet, dass bei eingebrachtem Ringelement 30'' in die Aufnahme 11 des Anschlussteils 10 der axiale Abschnitt bzw. der Vorsprung 36 sich in dem Zwischenraum 3 zwischen der Umfangswandung 15 der Aufnahme 11 und dem Rohr 100 befindet. In der Figur 5 ist dieser Montagezustand beispielhaft dargestellt, wobei dort das Ringelement 30'' bereits in Wirkposition gegen die Erhebung 110 des Rohres 100 gebracht ist, insbesondere in der zu den Figuren 1 und 2 beschriebenen Art und Weise.

Sofern nunmehr der Materialabschnitt 51 in die Sperrposition gebracht wird, wie dies beispielsweise bereits zu den Figuren 1 und 2 beschrieben ist, wird bei der Anschlussvorrichtung 1" der Materialabschnitt 51 unter elastischer Bewegung bzw. elastischer Verformung des Vorsprungs 36 bewegt. Der Materialabschnitt 51 wird also gegen die Kraft des Vorsprungs 36 in die Sperrposition gebracht. Dieser Montagezustand ist in Figur 6 beispielhaft gezeigt.

In der Sperrposition des Materialabschnitts 51 wirkt somit eine Rückstellkraft des Vorsprungs 36 als Vorspannkraft auf den Materialabschnitt 51. Durch die von dem Vorsprung 36 ausgehende Kraft ist es ermöglicht, dass bei einer möglichen Rückfederung des umgeformten Materialabschnitts 51 das Ringelement 30'' in der Wirkposition gegen das Rohr 100 gehalten bleibt und damit ist eine dauerhaft fluiddichte Verbindung begünstigt.

Der Vorsprung 36 kann in axialer Richtung federelastisch verformbar sein. Der Vorsprung 36 kann um den Außenumfang des Ringelementes 30'' umlaufen, beispielsweise vollständig umlaufen oder mit wenigstens einer Unterbrechung umlaufen. Beispielsweise ist das Ringelelement 30" mit dem Vorsprung 36 aus einem Federstahl hergestellt oder weist einen Federstahl auf. Beispielsweise ist der Vorsprung 36 als umlaufender Kragen oder Steg oder als umlaufende Rippe ausgebildet.

### Bezugszeichenliste

- 1: Anschlussvorrichtung
- 1': Anschlussvorrichtung
- 1": Anschlussvorrichtung

- 3: Zwischenraum

- 10: Anschlussteil
- 11: Aufnahme
- 12: Kanal
- 13: Mittelachse
- 14: Einstecköffnung
- 14.1: Öffnungsfläche
- 15: Umfangswandung
- 15.1: axialer Längenabschnitt
- 15.2: benachbarter axialer Längenabschnitt
- 15.3: axialer Längenabschnitt
- 16: Boden
- 16.1: Bodenfläche
- 17: Vertiefung
- 18: Gegenfläche
- 19: Koppelstelle
- 20: Innengewinde
- 21: Fortsatz
- 22: Basisabschnitt

- 30: Ringelement
- 30": Ringelement
- 31: Ende
- 32: Ende
- 33: Verformungsabschnitt
- 34: Drückfläche
- 35: Grundkörper
- 35": Grundkörper
- 36: Vorsprung

- 50: Sicherungsteil
- 51: Materialabschnitt
- 52: Drückfläche
- 58: Drückkante
- 100: Rohr
- 110: Erhebung
- 120: Längenabschnitt
- 130: Ende
- 140: weitere Erhebungen

- E: Einsteckrichtung
- D1: Wanddicke
- D2: Wanddicke

## Patentansprüche

1. Anschlussvorrichtung (1) zum Anschließen eines Rohres (100) mit außenumfangsseitiger Erhebung (110), umfassend:
ein Anschlussteil (10) mit einer Aufnahme (11), um darin einen die Erhebung (110) aufweisenden Längenabschnitt (120) des Rohres (100) einzustecken, wobei die Aufnahme (11) eine in eine Einsteckrichtung (E) verlaufende Mittelachse (13) aufweist und durch eine um die Mittelachse (13) verlaufende Umfangswandung (15) umfangsseitig begrenzt ist, wobei die Aufnahme (11) ferner eine quer zur Mittelachse (13) angeordnete Bodenfläche (16.1) aufweist, um daran die Erhebung (110) des Rohres (100) in Anlage zu bringen;
ein Ringelement (30), welches eingerichtet ist, in einen Zwischenraum (3) zwischen der Umfangswandung (15) der Aufnahme (11) und dem Rohr (100) in die Aufnahme (11) derart eingebracht zu werden, dass ein axiales Ende (31) des Ringelementes (30) als Sperre für die Erhebung (110) wirkt, um das Rohr (100) gegen ein Herausbewegen aus der Aufnahme (11) zu sichern;
ein Sicherungsteil (50), welches dem Anschlussteil (10) zugeordnet ist und wenigstens einen Materialabschnitt (51) aufweist,
wobei der Materialabschnitt (51) ein verformbares Material aufweist oder daraus besteht und eingerichtet ist, durch eine Verformung in eine Sperrposition gebracht zu werden, um eine Sperre gegen ein Herausbewegen des Ringelementes (30) aus der Aufnahme (10) auszubilden,
wobei der Materialabschnitt (51) ein umformbares Material aufweist oder daraus besteht und eingerichtet ist, durch eine Umformung in die Sperrposition gebracht zu werden, und
wobei der Materialabschnitt (51) an einem axialen Längenabschnitt (15.1) der Umfangswandung (15) der Aufnahme (11) ausgebildet ist,
**dadurch gekennzeichnet, dass** die Umfangswandung (15) der Aufnahme (11) in einem Bereich des axialen Längenabschnitts (15.1) eine Wanddicke (D1) aufweist, welche kleiner als die Wanddicke (D2) der Umfangswandung (15) in einem benachbarten axialen Längenabschnitt (15.2) ist, welcher sich in Richtung der Bodenfläche (16.1) erstreckt.

2. Anschlussvorrichtung nach Anspruch 1, wobei der Materialabschnitt (51) um die Mittelachse (13) der Aufnahme (11) umlaufend ausgebildet ist.

3. Anschlussvorrichtung nach Anspruch 1 oder 2, wobei das Ringelement (30'') einen radial nach außen stehenden Vorsprung (36) aufweist, welcher in axialer Richtung des Ringelementes (30'') elastisch bewegbar und/oder elastisch verformbar ist und einem axialen Abschnitt des Ringelementes (30'') zugeordnet ist, welcher sich bei eingebrachtem Ringelement (30'') in dem Zwischenraum (3) zwischen der Umfangswandung (15) der Aufnahme (11) und dem Rohr (100) befindet, so dass der Materialabschnitt (51) des Sicherungsteils (50) gegen die Kraft des elastischen Vorsprungs (36) in die Sperrposition gebracht wird.

4. Anschlussvorrichtung nach einem der vorhergehenden Ansprüche, wobei die Aufnahme (11) eine um die Mittelachse (13) umlaufende, radiale Vertiefung (17) im Bereich der Bodenfläche (16.1) aufweist, und wobei das Ringelement (30) eingerichtet ist, in den Zwischenraum (3) zwischen der Umfangswandung (15) der Aufnahme (11) und dem Rohr (100) in die Aufnahme (11) derart eingebracht zu werden, dass ein axiales Ende (31) des Ringelementes (30) gegen die Erhebung (110) des Rohres (100) drückt, um eine Umformung der Erhebung (110) unter einem Einfließen von Umformmaterial in die Vertiefung (17) der Aufnahme (11) zu bewirken.

5. Anschlussvorrichtung nach einem der vorhergehenden Ansprüche, wobei das Ringelement (30) eine quer zur Mittelachse (13) verlaufende Drückfläche (34) aufweist und das Anschlussteil (10) eine quer zur Mittelachse (13) verlaufende Gegenfläche (18) hat, wobei die Gegenfläche (18) eingerichtet ist, als Widerlagerfläche für eine Drückvorrichtung benutzt zu werden, um eine in Einsteckrichtung (E) wirkende Druckkraft auf die Drückfläche (34) des Ringelementes (30) auszuüben.

6. Anschlussvorrichtung nach einem der vorhergehenden Ansprüche, wobei das Sicherungsteil (50) eine Drückfläche (52) und/oder eine Drückkante (58) aufweist, um durch Ausüben einer Druckkraft darauf die Verformung des Materialabschnitts (51) zur Ausbildung der Sperre zu bewirken, und wobei eine Gegenfläche (18) vorgesehen ist, welche eingerichtet ist, als Widerlagerfläche für eine Drückvorrichtung benutzt zu werden, um die Druckkraft auf die Drückfläche (52) und/oder die Drückkante (58) auszuüben.

7. Anschlussvorrichtung nach einem der vorhergehenden Ansprüche, wobei das Anschlussteil (10) eine mit der Aufnahme (11) strömungsverbundene Koppelstelle (19) aufweist, um das Anschlussteil (10) mit einem Anschluss einer weiteren Vorrichtung zu koppeln.

8. Anschlussvorrichtung nach einem der vorhergehenden Ansprüche, wobei die Anschlussvorrichtung (1) als Verbinder zum Verbinden der Enden von zwei Rohren mit Erhebung ausgebildet ist und wobei das Anschlussteil (10) eine mit der Aufnahme (11) strömungsverbundene weitere Aufnahme aufweist und ein mit der weiteren Aufnahme zusammenwirkendes weiteres Ringelement vorgesehen ist.

9. Verbindungsanordnung mit einer Anschlussvorrichtung (1) nach einem der Ansprüche 1 bis 8 und einem daran angeschlossenen Rohr (100) mit außenumfangsseitiger Erhebung (110), insbesondere einem Wellrohr.

10. Verwendung einer Anschlussvorrichtung (1) nach einem der Ansprüche 1 bis 8 zum Anschließen eines Rohres (100) mit außenumfangsseitiger Erhebung (110), insbesondere eines Wellrohres.

11. Verwendung einer Anschlussvorrichtung (1) nach einem der Ansprüche 1 bis 8 zum Verbinden eines Rohres (100) mit einer, einen technischen Prozess ausführenden Vorrichtung, um über das Rohr (100) ein Fluid der Vorrichtung zuzuführen oder ein Fluid aus der Vorrichtung abzuführen.

12. Verfahren zum Montieren eines Rohres (100) mit außenumfangsseitiger Erhebung (110) an einem Anschlussteil (10), umfassend die Schritte:
i) Bereitstellen einer Anschlussvorrichtung (1) nach einem der Ansprüche 1 bis 8;
ii) Einstecken eines die Erhebung (110) aufweisenden Längenabschnitts (120) des Rohres (100) in die Aufnahme (11) des Anschlussteils (10) der Anschlussvorrichtung (1);
iii) Einbringen des Ringelementes (30) der Anschlussvorrichtung (1) in einen Zwischenraum (3) zwischen der Umfangswandung (15) der Aufnahme (11) und dem Rohr (100), so dass ein axiales Ende (31) des Ringelementes (30) als Sperre für die Erhebung (110) wirkt, um das Rohr (100) gegen ein Herausbewegen aus der Aufnahme (11) zu sichern;
iv) Umformen des Materialabschnittes (51) des Sicherungsteils (50) der Anschlussvorrichtung (1) von einer Ausgangsform in eine sperrende Form, wobei in der Ausgangsform eine zum Einstecken des Rohres (100) genutzte Einstecköffnung (14) freigegeben ist und in der sperrenden Form die Einstecköffnung (14) versperrt ist, so dass eine Sperre gegen ein Herausbewegen des Ringelementes (30) aus der Aufnahme (11) vorliegt.

13. Verfahren nach Anspruch 12, wobei in Schritt ii) das Ringelement (30) in den Zwischenraum (3) zwischen der Umfangswandung (15) der Aufnahme (11) und dem Rohr (100) derart eingebracht wird, dass ein axiales Ende (31) des Ringelementes (30) gegen die Erhebung (110) des Rohres (100) drückt, um eine Umformung der Erhebung (110) zu bewirken.

## Claims

1. Connection device (1) for connecting a pipe (100) having an outer peripheral projection (110), comprising:
a connection part (10) having a socket (11), in order to plug a longitudinal portion (120) of the pipe (100) having the projection (110) therein, wherein the socket (11) has a central axis (13) running in a plugging direction (E) and is bordered peripherally by a peripheral wall (15) running around the central axis (13), wherein the socket (11) further has a floor area (16.1) arranged transversely to the central axis (13), in order to bring the projection (110) of the pipe (100) into contact with this;
a ring element (30), which is configured to be introduced into the socket (11) in an intermediary chamber (3) between the peripheral wall (15) of the socket (11) and the pipe (100) in such a way that an axial end (31) of the ring element (30) acts as a barrier for the projection (110) in order to secure the pipe (100) from moving out of the socket (11);
a securing part (50) which is allocated to the connection part (10) and has at least one material portion (51),
wherein the material portion (51) has a malleable material or consists thereof and is configured to be brought into a barrier position by means of a deformation, in order to form a barrier against the ring element (30) moving out of the socket (10),
wherein the material portion (51) has or consists of a material that can be remoulded, and is configured to be brought into the barrier position by means of a remoulding, and
wherein the material portion (51) is formed on an axial longitudinal portion (15.1) of the peripheral wall (15) of the socket (11),
**characterised in that** the peripheral wall (15) of the socket (11) has a wall thickness (D1) in a region of the axial longitudinal portion (15.1) which is smaller than the wall thickness (D2) of the peripheral wall (15) in an adjacent axial longitudinal portion (15.2), which extends in the direction of the floor area (16.1).

2. Connection device according to claim 1, wherein the material portion (51) is formed all around the central axis (13) of the socket (11).

3. Connection device according to claim 1 or 2, wherein the ring element (30") has a radially outward protrusion (36), which can be moved elastically and/or can be deformed elastically in the axial direction of the ring element (30") and is allocated to an axial portion of the ring element (30"), which, with a introduced ring element (30"), is located in the intermediary chamber (3) between the peripheral wall (15) of the socket (11) and the pipe (100), such that the material portion (51) of the securing part (50) is brought into the barrier position against the force of the elastic protrusion (36).

4. Connection device according to one of the preceding claims, wherein the socket (11) has a radial indentation (17) running around the central axis (13) in the region of the floor area (16.1), and wherein the ring element (30) is configured to be introduced into the socket (11) in the intermediary chamber (3) between the peripheral wall (15) of the socket (11) and the pipe (100) in such a way that an axial end (31) of the ring element (30) presses against the projection (110) of the pipe (100), in order to cause a remoulding of the projection (110) under the influence of remoulding material into the indentation (17) of the socket (11).

5. Connection device according to one of the preceding claims, wherein the ring element (30) has a pressing surface (34) running transversely to the central axis (13), and the connection part (10) has a counter surface (18) running transversely to the central axis (13), wherein the counter surface (18) is configured to be used as a counter bearing surface for a pressure device, in order to exert a pressing force acting in the plugging direction (E) on the pressing surface (34) of the ring element (30).

6. Connection device according to one of the preceding claims, wherein the securing part (50) has a pressing surface (52) and/or a pressing edge (58), in order to cause the deformation of the material portion (51) by exerting a pressing force thereon to form the barrier, and wherein a counter surface (18) is provided which is configured to be used as a counter bearing surface for a pressure device, in order to exert the pressing force on the pressing surface (52) and/or the pressing edge (58).

7. Connection device according to one of the preceding claims, wherein the connection part (10) has a coupling point (19) that can be fluidically connected to the socket (11), in order to couple the connection part (10) to a connection of a further device.

8. Connection device according to one of the preceding claims, wherein the connection device (1) is formed as a connector for connecting the ends of two pipes to the projection, and wherein the connection part (10) has a further socket fluidically connected to the socket (11), and a further ring element interacting with the further socket is provided.

9. Connection arrangement having a connection device (1) according to one of claims 1 to 8 and a pipe (100) connected thereto having an outer peripheral projection (110), in particular a corrugated pipe.

10. Use of a connection device (1) according to one of claims 1 to 8 for connecting a pipe (100) having an outer peripheral projection (110), in particular of a corrugated pipe.

11. Use of a connection device (1) according to one of claims 1 to 8 for connecting a pipe (100) having a device carrying out a technical process, in order to supply a fluid to the device via the pipe (100) or to dissipate a fluid from the device.

12. Method for installing a pipe (100) having an outer peripheral projection (110) on a connection part (10), comprising the steps of:
i) providing a connection device (1) according to one of claims 1 to 8;
ii) plugging a longitudinal portion (120) of the pipe (100) having the projection (110) into the socket (11) of the connection part (10) of the connection device (1);
iii) introducing the ring element (30) of the connection device (1) into an intermediary chamber (3) between the peripheral wall (15) of the socket (11) and the pipe (100), such that an axial end (31) of the ring element (30) acts as a barrier for the projection (110), in order to secure the pipe from moving out of the socket (11);
iv) remoulding the material portion (51) of the securing part (50) of the connection device (1) from a starting shape into a blocking shape, wherein, in the start shape, a plugging opening (14) used for plugging in the pipe (100) is released and, in the blocking shape, the plugging opening (14) is blocked, such that there is a barrier against the ring element (30) moving out of the socket (11).

13. Method according to claim 12, wherein, in step ii), the ring element (30) is introduced into the intermediary chamber (3) between the peripheral wall (15) of the socket (11) and the pipe (100) in such a way that an axial end (31) of the ring element (30) presses against the projection (110) of the pipe (100), in order to cause a remoulding of the projection (110).

## Revendications

1. Dispositif de raccordement (1) destiné à raccorder un tuyau (100) à surélévation circonférentielle extérieure (110), comprenant :
une partie de raccordement (10) dotée d'un réceptacle (11) permettant d'y insérer une portion longitudinale (120) du tuyau (100) présentant la surélévation (110), ledit réceptacle (11) présentant un axe central (13) s'étendant dans une direction d'enfichage (E) et étant limité circonférentiellement par une paroi circonférentielle (15) s'étendant autour de l'axe central (13), ledit réceptacle (11) présentant en outre une surface inférieure (16.1) disposée transversalement à l'axe central (13) et contre laquelle la surélévation (110) du tuyau (100) est destinée à venir en contact ;
un élément annulaire (30) qui est conçu pour être inséré dans un espace (3) entre la paroi circonférentielle (15) du réceptacle (11) et le tuyau (100) de telle façon qu'une extrémité axiale (31) de l'élément annulaire (30) sert à bloquer la surélévation (110) afin d'empêcher le tuyau (100) de sortir du réceptacle (11) ;
une partie de consolidation (50) qui est associée à la partie de raccordement (10) et qui présente au moins une portion matérielle (51),
ladite portion matérielle (51) présentant ou se composant d'un matériau déformable et étant conçue pour être amenée en position de blocage sous l'effet d'une déformation afin de former un blocage empêchant l'élément annulaire (30) de sortir du réceptacle (10),
ladite portion matérielle (51) présentant ou se composant d'un matériau déformable et étant conçue pour être amenée en position de blocage par déformation, et
ladite portion matérielle (51) étant formée sur une portion longitudinale axiale (15.1) de la paroi circonférentielle (15) du réceptacle (11),
**caractérisé en ce que** la paroi circonférentielle (15) du réceptacle (11) a, dans une région de la portion de longueur axiale (15.1), une épaisseur de paroi (D1) qui est inférieure à l'épaisseur de paroi (D2) de la paroi circonférentielle (15) dans une portion de longueur axiale (15.2) adjacente qui s'étend en direction de la surface inférieure (16.1).

2. Dispositif de raccordement selon la revendication 1, dans lequel la portion matérielle (51) est formée sur le pourtour de l'axe central (13) du réceptacle (11).

3. Dispositif de raccordement selon la revendication 1 ou 2, dans lequel l'élément annulaire (30") présente une saillie radiale vers l'extérieur (36) qui est élastiquement mobile et/ou élastiquement déformable dans la direction axiale de l'élément annulaire (30") et qui est associée à une portion axiale de l'élément annulaire (30") qui, lorsque l'élément annulaire (30") est inséré, se trouve dans l'espace (3) présent entre la paroi circonférentielle (15) du réceptacle (11) et le tuyau (100), de telle façon que la portion matérielle (51) de la partie de consolidation (50) est amenée en position de blocage contre la force de la saillie élastique (36).

4. Dispositif de raccordement selon l'une des revendications précédentes, dans lequel le réceptacle (11) présente un renfoncement radial (17) sur le pourtour de l'axe central (13) au niveau de la surface inférieure (16.1), et dans lequel l'élément annulaire (30) est conçu pour être inséré dans l'espace (3) entre la paroi circonférentielle (15) du réceptacle (11) et le tuyau (100) de telle façon qu'une extrémité axiale (31) de l'élément annulaire (30) appuie contre la surélévation (110) du tuyau (100) afin de provoquer une déformation de la surélévation (110) accompagnée d'une pénétration de matériau de déformation dans l'évidement (17) du réceptacle (11).

5. Dispositif de raccordement selon l'une des revendications précédentes, dans lequel l'élément annulaire (30) présente une surface de pression (34) s'étendant transversalement à l'axe central (13) et la partie de raccordement (10) possède une surface complémentaire (18) s'étendant transversalement à l'axe central (13),
ladite surface complémentaire (18) étant conçue pour servir de surface de contact pour un dispositif de pression, exerçant une force de pression agissant sur la surface de pression (34) de l'élément annulaire (30) dans la direction d'enfichage (E).

6. Dispositif de raccordement selon l'une des revendications précédentes, dans lequel l'élément de consolidation (50) présente une surface de pression (52) et/ou un bord de pression (58) permettant, lorsqu'il s'y exerce une force de pression, de provoquer la déformation de la portion matérielle (51) afin de former le blocage, et dans lequel il est prévu une surface complémentaire (18) conçue pour servir de surface de contact pour un dispositif de pression, exerçant la force de pression sur la surface de pression (52) et/ou le bord de pression (58).

7. Dispositif de raccordement selon l'une des revendications précédentes, dans lequel la partie de raccordement (10) présente un point de couplage (19) relié fluidiquement au réceptacle (11) afin de coupler la partie de raccordement (10) à un raccord d'un autre dispositif.

8. Dispositif de raccordement selon l'une des revendications précédentes, ledit dispositif de raccordement (1) étant conçu à la manière d'un connecteur permettant de connecter les extrémités de deux tuyaux à surélévation et ladite partie de raccordement (10) présentant un réceptacle supplémentaire relié fluidiquement audit réceptacle (11), et un élément annulaire supplémentaire coopérant avec ledit réceptacle supplémentaire étant prévu.

9. Ensemble de connexion doté d'un dispositif de raccordement (1) selon l'une des revendications 1 à 8 et d'un tuyau (100) à surélévation circonférentielle extérieure (110) qui est raccordé à celui-ci, notamment un tuyau ondulé.

10. Utilisation d'un dispositif de raccordement (1) selon l'une des revendications 1 à 8 pour raccorder un tuyau (100) à surélévation circonférentielle extérieure (110), notamment un tuyau ondulé.

11. Utilisation d'un dispositif de raccordement (1) selon l'une des revendications 1 à 8 pour connecter un tuyau (100) à un dispositif effectuant un processus technique afin d'alimenter le dispositif en fluide ou d'évacuer un fluide du dispositif par le tuyau (100).

12. Procédé de montage d'un tuyau (100) à surélévation circonférentielle extérieure (110) sur une partie de raccordement (10), comprenant les étapes suivantes :
i) mise à disposition d'un dispositif de raccordement (1) selon l'une des revendications 1 à 8,
ii) insertion d'une portion longitudinale (120) du tuyau (100) présentant la surélévation (110) dans le réceptacle (11) de la partie de raccordement (10) du dispositif de raccordement (1),
iii) insertion de l'élément annulaire (30) du dispositif de raccordement (1) dans un espace (3) entre la paroi circonférentielle (15) du réceptacle (11) et le tuyau (100) de telle façon qu'une extrémité axiale (31) de l'élément annulaire (30) serve à bloque la surélévation (110) afin d'empêcher le tuyau (100) de sortir du réceptacle (11),
iv) déformation de la portion matérielle (51) de la partie de consolidation (50) du dispositif de raccordement (1) à partir d'une forme initiale en une forme permettant un blocage, étant entendu que, sous la forme initiale, une ouverture d'insertion (14) permettant d'insérer le tuyau (100) est dégagée et, sous la forme permettant le blocage, l'ouverture d'insertion (14) est bloquée, créant un blocage empêchant la sortie de l'élément annulaire (30) hors du réceptacle (11).

13. Procédé selon la revendication 12, dans lequel, à l'étape ii), l'élément annulaire (30) est inséré dans l'espace (3) entre la paroi circonférentielle (15) du réceptacle (11) et le tuyau (100) de telle façon qu'une extrémité axiale (31) de l'élément annulaire (30) appuie contre la surélévation (110) du tuyau (100) pour provoquer une déformation de la surélévation (110).
